# EUROPEAN PATENT APPLICATION

(11) **EP 4 613 536 A1**
(43) Date of publication of application: **10.09.2025**
(21) Application number: 24161738.0
(22) Date of filing: 06.03.2024
(51) Int. Cl.: B60L 3/12, B60L 53/10, B60L 53/67, B60L 53/80, B60S 5/06, B60L 53/30, B60L 58/12, B60L 58/13, B60L 58/21, G06Q 10/0631, G06Q 10/08

(54) **INDUSTRIAL TRUCK WITH INTERCHANGEABLE FAST CHARGE BATTERY**

(71) Applicant: Mitsubishi Logisnext Europe Oy, 04401 Järvenpää (FI)
(72) Inventor: CALLDERYD, Jan, 553 39 Jönköping (SE)
(74) Representative: Lind Edlund Kenamets Intellectual Property AB

(57) **Abstract**

An industrial truck fleet system comprising a first plurality of electrically powered industrial trucks, each truck comprising an exchangeable battery pack of a first type, wherein the batteries of the battery pack of the first type are fast charge batteries, and preferably lithium batteries. The fleet system further comprises a plurality of additional battery packs of the first type and at least one charging station for charging battery packs of the first type, wherein the charging station(s) accommodates the plurality of additional battery packs of the first type. The charging station(s) are preferably operated in accordance with a first-in-first-out scheme. The number of charging stations is in the range of 0.01 - 0.5 times the number of electrically powered industrial trucks.

## Description

### TECHNICAL FIELD OF THE INVENTION

The present invention relates to an industrial truck fleet system comprising a plurality of electrically powered industrial trucks with rechargeable batteries.

### BACKGROUND OF THE INVENTION

Electrically powered industrial trucks, such as forklift trucks, typically include a rechargeable battery for powering the vehicle. The trucks conventionally comprise lead-acid batteries. Such systems require low investment cost. However, drawbacks are that the batteries are bulky and heavy. The energy density is relatively low, and charging takes long time. The batteries are further sensitive to neglected maintenance and misuse, and the lifetime of the batteries is low. Due to the acidulous contents and the potentially explosive gas generated during charging, special safety arrangements are further needed during charging.

Many business operations have facilities that utilize fleets of battery powered vehicles. For example, a warehouse may use a fleet of forklift trucks to move goods into and out of the warehouse. In some cases, such facilities operate twenty-four hours a day. In such scenarios, battery management to keep batteries charged and vehicles moving becomes a difficult problem.

In the typical warehouse scenario, a worker checks out a vehicle and utilizes that vehicle for his entire shift. As the vehicle must also be used for the next shift, the battery must be changed to allow the vehicle to continue to operate, while the original battery is charged off-line. As a typical charge can take up to 8 hours, three batteries may be needed to keep a vehicle running for three 8-hour shift.

It is possible to use less batteries by having the operators only change batteries when the indicator on the truck indicates that a change is required. However, such an on-demand change of batteries is typically tedious and cumbersome in practice, since it requires the operator to abort his current operation to find a charging station where the battery can be replaced.

This model of management of the batteries is inefficient and expensive. In addition to the cost of the multiple batteries required for each vehicle, there is the additional cost of the equipment and labor required to change the batteries and the lost time while the batteries are being rotated.

To minimize the battery changing problem, some facilities have been moving away from charging the batteries at the end of the shift and moving to "rapid charging" of the batteries. Rapid charging occurs when an operator of one of the vehicles takes a break and connects to a very high-rate charger for anywhere from fifteen minutes to half an hour. This process will put enough energy back into the battery such that it can run the vehicle until the next time the operator takes a break, or until the end of the operator's shift. While this method eliminates spare batteries, the rapid charge method has several draw backs. First, it is inefficient from an energy usage point of view, with about 75 percent of the energy going into the battery and about 25 percent of the energy being wasted as heat. In addition, the rapid charging tends to shorten the life of the battery dramatically. Using a battery changing scenario, one may expect to get up to seven years life out of a battery, but in a rapid charging scenario, the life expectancy of a battery may be reduced to as little as three years. In addition, it is necessary to manage the break time of the operators by staggering the break time such that a charger is always available when the operator is on break.

As an alternative, it is nowadays known to provide trucks with lithium-ion batteries. Such batteries have many advantages compared to lead-acid batteries. For example, lithium-ion batteries have much longer lifetime than lead-acid batteries, typically 2-4 times longer, and with reduced need for maintenance. The lithium-ion batteries also allow faster charging, and charging can be made with less power consumption, i.e. with less waste energy, and without any gassing problems.

On the other hand, lithium-ion batteries are generally much more expensive and require a greater initial investment. To this end, lithium-ion batteries are not replaced during normal operation, but instead charging is made with the batteries remaining installed on the trucks. Trucks having lithium-ion batteries are normally charged during breaks and the like, to top-up the charging, so-called "opportunity charging", and at shift ends. For this to work, there is a need for at least as many chargers as there are trucks, since all truck operators will generally have a break at the same time, and also creates great peaks in the grid power consumption. Overall, the downtime for each truck may be as high as 1 hour per shift in order to provide sufficient charging. The chargers and charging stations also take up much space in the warehouse.

Therefore, it would be desirable to provide a new method and system for managing operation of an industrial truck fleet to address at least some of the above-discussed problems and make the operation of the trucks, batteries and chargers more efficient, and with less costly grid power consumption.

### SUMMARY OF THE INVENTION

It is therefore an object to provide an industrial truck which alleviates all, or at least some, of the above-discussed drawbacks and problems of the prior art.

This object is achieved with an industrial truck as defined in the appended claims.

According to a first aspect there is provided an industrial truck fleet system comprising:
a first plurality of electrically powered industrial trucks, each truck comprising an exchangeable battery pack of a first type, wherein the batteries of the battery pack of the first type are fast charge batteries;
a plurality of additional battery packs of the first type; and
at least one charging station for charging battery packs of the first type, wherein the charging station(s) accommodates the plurality of additional battery packs of the first type, and wherein each charging station preferably operates by a first-in-first-out scheme;
wherein the number of charging stations is in the range of 0.1-0.5 times the number of electrically powered industrial trucks.

The present invention is based on the understanding that fast charge batteries may be efficiently used for exchangeable battery packs in industrial trucks in an industrial truck fleet system, thereby greatly reducing the downtime of the trucks and the peak power consumption. This can all be achieved with a very limited number of battery packs and charging stations.

By a fast charge battery is in the present invention meant a battery that can be fast charged to be fully charged, or charged to a relatively high state of charge, such as above 75%, within a relatively short time, such as within 1 hour, and preferably within about 30 minutes. In particular, the fast charge battery may be arranged to be fast charged at 1C, to be essentially fully charged within one hour or less.

The fast charge battery is preferably a lithium-ion battery, i.e. comprising lithium battery cells, but the fast charge battery may also be other types of fast charge batteries, such as sodium ion batteries.

The batteries may alternatively be referred to as battery modules, and preferably each battery or battery module comprises a plurality of battery cells. Thus, a battery pack may comprise a plurality of battery modules, or batteries, each comprising a plurality of battery cells.

Fast charge batteries, such as lithium-ion batteries, have many advantages compared to e.g. lead-acid batteries. For example, fast charge batteries have much longer lifetime than lead-acid batteries, typically 2-4 times longer, and with reduced need for maintenance. The fast charge batteries are also not significantly deteriorated by inconsistent charging, such as being totally discharged, being charged to less than full capacity, etc. The fast charge batteries also generally have the same output performance regardless of state of charge (SOC), and can be fast charged e.g. at 1C. Charging can also be made with less power consumption, i.e. with less waste energy, and without any gassing problems.

Fast charge batteries also generally have a much lower weight than lead-acid batteries. A battery pack for an industrial truck with lead-acid batteries often weighs a ton or more, whereas the weight of a lithium-ion battery pack with similar capacity would weigh 10-65% of the weight of the corresponding lead-acid battery pack.

The size of the lithium-ion battery pack is also correspondingly smaller. Thus, smaller battery packs than in conventional lead-acid battery trucks can be used.

This facilitates the exchange of battery packs at the charging stations and e.g. enables a very quick exchange procedure, including removal of the battery pack to be charged from the truck and insertion of a charged battery pack into the truck as a replacement. Such an exchange of battery packs can hereby be made in a few minutes in total, and typically in about 1-2 minutes, or even quicker.

The truck fleet system is operable as a stand-alone system and may be scaled to essentially any number of fleet sizes. Thus, the system is scalable and can be used for any number of trucks and any number of charging stations.

In an embodiment, the first plurality of electrically powered industrial truck is at least 5, and preferably at least 20, and more preferably at least 50, and most preferably at least 100.

The number of charging stations is naturally an integer. Thus, the number of charging stations is preferably an integer within the range of 0.1-0.5 times the number of electrically powered industrial trucks.

Preferably, the number of charging stations is an integer in the range of 0.02-0.5 times the number of electrically powered industrial trucks, and most preferably in the range 0.03-0.33, such as about 0.2.

The total number of battery packs of the first type is preferably in the range of 1.05-1.8 times the number of trucks, and more preferably 1.1-1.5, and most preferably 1.14-1.35. Again, the number of battery packs is naturally an integer, and thus, the number of battery packs is an integer within any of these ranges.

Differently put, when the number of electrically operated trucks having battery packs of the same first type may be referred to as X, the number of charging and changing stations may be referred to as Z*X, where Z is in the range of 0.01-0.5, and preferably 0.01-0.3, such as about 0.2.

In a preferred embodiment, the number of additional battery packs is at least as great as the number of charging stations. In order to increase efficiency, the number of additional battery packs may also be greater than the number of charging stations, such as 20%-50% greater.

In an embodiment the number of additional battery packs is at least as great as twice the number of charging stations. In such an embodiment, each charging station may at all times accommodate and charge at least two additional battery packs.

Differently put, when the number of electrically operated trucks having battery packs of the same first type may be referred to as X, the number of the battery packs may be referred to as Y*X, where Y is in the range of 1.05-1.8, and preferably 1.1-1.5, such as about 1.3.

As an example, the number of industrial trucks in the fleet may be 20. In this example, the number of charging stations may be 1-10, and preferably 1-5, such as 3 or 4. The number of additional battery packs in the system may be 2-20, and preferably 2-10, such as 5 or 7.

As another example, the number of industrial trucks in the fleet may be 200. In this example, the number of charging stations may be 20-100, and preferably 20-30, such as 25. The number of additional battery packs in the system may be 20-200, and preferably 30-50, such as 40.

Generally, the efficiency of the system increases for greater fleet sizes, and the relative amount of charging stations and additional battery packs may consequently be lower for relatively big fleets compared to relatively small fleets.

The charging stations are arranged externally from the electrically powered industrial trucks and are arranged to be accessible to the electrically powered industrial trucks. The charging stations are preferably accessible so that the trucks can be moved to a loading and offloading area of the charging stations, where battery packs to be charged can be offloaded from the trucks and where charged battery packs can be loaded to the trucks.

With the present system, a very quick exchange and replacement process for battery packs is enabled, which makes it possible to exchange battery packs only when there is a need for it, such as when the state of charge has reached a determined replacement level, such as below 30%, below 20%, below 10%, or the like. The battery packs could consequently be in active operation at least until they have been discharged to 80-90%.

The trucks may be provided with a need-for-recharge or low battery indicator, to make the operator aware of the need for exchange of battery pack at a charging station. This may be realized by a charge sensor or battery sensor. The need-for-recharge indicator could e.g. be a light indicator that arranged to be activated when battery pack has been discharged to reach the replacement level has been reached, a display for providing text or graphical information to the operator, an audio indicator, e.g. issuing an alarm, or the like. The need-for-recharge indicator signals to the operator that there is a need to change the battery pack of the truck at a charging station within a certain time period, such as in less than 15 minutes, less than 10 minutes, or the like.

Due to the swift change of battery packs and the change of batteries only when needed, the battery packs of the trucks in the fleet will be changed at different times during operation of the trucks, and not only during breaks, at the end of shifts, etc. The charging of the batteries will consequently be relatively evenly distributed over time, thereby making the power consumption of the system related to the charging to be relatively even and constant over time. Thus, the system balances the need for charging between the different trucks, and consequently also balances the power consumption to a relatively even level. Hereby, peaks in power consumption are avoided, which reduces the requirements of the power system, reduces the required grip power and also reduces the power fees. Overall, this greatly reduces the charging costs.

The charging stations are preferably arranged to immediately start to charge any battery pack received from a truck that has changed battery pack and continue to charge all battery packs in the charging station constantly, or until a desired state of charge has been reached, such as 100%.

Since the charging stations are operated by a first-in-first-out scheme, any charged battery pack served to a truck during a change will be the battery pack or the battery packs available in the charging station that has been in the charging station for the longest time, and consequently the battery pack having the highest state of charge.

Since all, or at least most, charging stations will at all, or most, times accommodate and charge at least one of the additional battery packs, a truck can turn to any of the available charging stations for a battery pack change, whenever the need arises.

Notably, it does not matter whether the battery pack in the charging station provided to the truck will be fully charged or not. Since the trucks preferably only changes battery packs when the currently used battery pack has a relatively low state of charge, all additional battery packs accommodated in the charging stations will have a higher state of charge, and the battery pack with the highest state of charge of the battery packs in the charging station will be supplied to the truck in exchange for the discharged battery pack. If the battery pack received by the truck is fully charged, the truck may continue in operation for a longer time before the next battery pack exchange, whereas a battery pack which has not yet been fully charged would need to be changed earlier. However, since the time required for changing the battery packs is low, such as one or a few minutes, this does not have any significant effect on productivity. Instead, this will have the positive effect of making the occurrences of battery pack exchanges even more evenly distributed over time. Further, since fast charge batteries generally have a relatively constant performance and are not significantly deteriorated by charging regardless of the state of charge, the operation power of the trucks are maintained relatively constant.

Due to the evenly distributed occurrence of battery pack exchanges in the system over time, and the swift exchange process, the downtime of the trucks is maintained very low. Thus, apart from a few minutes of battery pack exchanges per day, each truck are, at least in respect of powering, operable 24/7.

Typically, the new system reduces grid peak power supply requirement to 10-20% compared to traditional Lithium-ion charging, where the battery packs are charged while still onboard the truck, and 15-30% compared to conventional Lead-Acid. This reduces cost of grid capacity and allow large truck fleets to operate even if available grid power supply is low.

Since the system allows battery packs to be changed quickly and whenever the need arises, it also enables use of smaller battery packs, thereby lowering the costs even further. Instead of conventionally used battery packs, which are typically arranged to allow continuous operation of the truck for a long time, such as for 8 hours or more, the battery packs of the present system could be arranged to allow continuous operation of the trucks for less than 6 hours, less than 4 hours, or even less than 3 hours. Use of such significantly smaller battery packs greatly reduces the investment costs for the truck fleet.

The battery packs may have any suitable output voltage for driving an industrial truck. Preferably, the output voltage is at least one of 24 V, 48 V and 80 V. The capacity of the battery packs may be in the range of 100-600 Ah.

In embodiments, the battery packs may have an output voltage of 24 V and a capacity of 100-300 Ah, such as 100-200 Ah or 200-300 Ah. Such battery packs would generally be suitable for smaller industrial trucks, such as pallet or stacker trucks of walkie or rider type, second level order pickers, etc.

In other embodiments, the battery packs may have an output voltage of 48 V and a capacity of 250-400 Ah. Such battery packs would generally be suitable for middle range industrial trucks, such as reach trucks, electric counterbalance (ECB) trucks, e.g. in the weight range of 1.25-2 tons, etc.

In other embodiments, the battery packs may have an output voltage of 80 V and a capacity of 400-600 Ah. Such battery packs would generally be suitable for larger trucks, such as larger electric counterbalance (ECB) trucks, e.g. in the weight range of 2.5-5.5 tons, etc.

In the presently disclosed system, the battery packs are arranged as modular interchangeable battery packs for use in the industrial trucks of the fleet.

Each charging station preferably operates by a first-in-first-out scheme.

At least one of the charging stations, and preferably a majority of the charging stations, such as all of the charging stations, may comprise a looped path along which battery packs are moveable during charging.

The looped path preferably starts and ends in a common input and output area. The input and output area may be easily accessible for the trucks, thereby enabling a swift change of battery packs.

The looped path may extend in a horizontal plane. Alternatively, the looped path may extend in a vertical plane. Arrangement of the looped path in a vertical plane is beneficial since it minimizes the horizontal dimensions of the charging station, thereby lowering the need for occupying valuable floor area.

For a vertical looped path, the charging stations may e.g. be arranged similar to a bucket chain excavator, where a received battery pack is moved along a looped path along a vertical conveyor, and at the same time being charged. A vertical looped path is much easier to realize with fast charge battery packs than e.g. for conventional lead-acid batteries, since the weight and dimensions are much smaller. Typically, a lithium-ion battery pack would weigh 20-25% of the weight of a corresponding lead-acid battery.

In an embodiment, the charging stations enabling a vertical looped path may be arranged as a bucket chain excavator.

The exchangeable battery packs in the industrial trucks are preferably arranged to be laterally removable. Hereby, removal and insertion of battery packs can be made in a horizontal plane, requiring minimal force.

To facilitate removal of the battery packs from the trucks, the electrically powered industrial trucks preferably comprise roller beds arranged underneath the battery packs. Hereby, the battery pack may simply be rolled out from the compartment housing the battery pack in a truck, with a very limited force required.

In embodiments, the charging stations may have a horizontal insertion/removal plane, and preferably arranged as a roller bed, a conveyor, or the like, on which a battery pack can be moved laterally out from the truck, and a replacement battery pack be moved the same way into the truck. Hereby, removal and insertion of battery packs from and into the truck can be made in an essentially horizontal plane, thereby limiting the force required. In case the battery pack compartments of the industrial trucks are arranged at different heights at various trucks, the horizontal insertion/removal plane may be height adjustable, thereby allowing the plane to be height adjusted to the appropriate height for battery pack changes in any of the trucks.

The height adjustment may be controlled by data received from the truck, e.g. by reading an RFID tag of the truck, or by other means of wireless communication.

The fleet of industrial trucks may comprise industrial trucks of the same or similar type, which may all use the same type of battery packs. Further, in case different types of trucks are used within the system, the battery receiving compartment may be adjusted to fit one and the same type of battery packs. Adaptor arrangements may be used to enable matching between various batteries and trucks. In this case, all the trucks may be served by the same charging stations, and each and every of the battery packs within the system may be used as a replacement for the battery pack of any of the trucks.

However, the fleet may also comprise trucks of various types, where the same battery packs are not suitable for use in all of the different truck types.

Thus, in other embodiments the fleet of industrial trucks may comprise industrial trucks of different types, using two or more different types of battery packs. These different types of battery packs may e.g. differ in size, in capacity, in output voltage, in connection arrangements, and the like. For example, the different types of battery packs may be dedicated to various types of industrial trucks, such as trucks of smaller type, middle size trucks, and/or larger trucks.

In such embodiments, the system may comprise the same setup as discussed in the foregoing for at least one second battery pack type, and more preferably at least two or more second battery pack types.

Alternatively put, the fleet of the system may further comprise a second plurality of electrically powered industrial trucks, each truck comprising an exchangeable battery pack of a second type, wherein the batteries of the battery pack of the second type are fast charge batteries; a plurality of additional battery packs of the second type; and at least one charging station for charging battery packs of the second type, wherein the charging station(s) accommodates the plurality of additional battery packs of the second type, and wherein each charging station operates by a first-in-first-out scheme; wherein the number of charging stations is in the range of 0.01-0.5 times the number of electrically powered industrial trucks comprising battery packs of the second type.

In case the system comprises two or more different battery pack types each charging station may be dedicated to one battery pack type. Hereby, different charging stations are used for the different battery pack types, and a truck in need of a battery pack replacement can choose a charging station for the type of battery pack it is using for the battery pack exchange. In such embodiments, the charging stations may be operated and arranged in essentially the same way, and the management of the two or more types of battery packs will be run in parallel.

However, alternatively the charging stations for charging battery packs of the first type and battery packs of the second or more type may comprise common charging stations for charging battery packs of both the first and second type. In such embodiments, the charging station may accommodate the battery packs of the different types separately, such as in different looped paths. However, it is also feasible to accommodate all the battery packs of the two or more different types in one and the same looped path.

Various ways of determining the type of battery pack to be exchanged at the charging stations are feasible. In embodiments, this can be made by the charging station determining the truck type and/or the battery pack type. The charging station may e.g. be provided with an RFID reader arranged to read an identity or type code for the industrial truck and/or the battery pack from an RFID tag arranged on the truck or the battery pack, thereby enabling determination of the battery pack type.

With the new system, the charging stations may be spread out over a warehouse area or gathered at one location, freely and independent of proximity to a parking area used for breaks and the like. The charging stations may e.g. be arranged at locations suitable for connection to a power grid, locations frequently passed by the trucks during operation, etc.

According to another aspect, there is provided a method for managing an industrial truck fleet system, wherein the industrial truck fleet system comprises a first plurality of electrically powered industrial trucks, each truck comprising an exchangeable battery pack of a first type, wherein the batteries of the battery pack of the first type are fast charge batteries,
a plurality of additional battery packs of the first type, and at least one charging station for charging battery packs of the first type, wherein the charging station(s) accommodates the plurality of additional battery packs of the first type, the method comprising:
continuously determining, in each of the electrically powered industrial trucks, a state of charge of the battery pack;
determining, in each of the trucks, that there is a need for exchange of the battery pack when the determined state of charge is below a predetermined threshold value; and
exchanging the battery pack of the electrically powered industrial trucks for which it has been determined that there is a need for exchange of the batter packs at one of the at least one charging stations, whereby the battery pack of the electrically powered truck is replaced with the additional battery pack of the charging station having been at the charging station for the longest time, in accordance with a first-in-first-out scheme;
wherein the number of charging stations is in the range of 0.01-0.5 times the number of electrically powered industrial trucks.

Corresponding advantages, features and embodiments as discussed above in relation to the first aspect are achievable and useable also in relation to this aspect.

Other aspects, benefits and advantageous features of the invention will be apparent from the following description and claims.

### BRIEF DESCRIPTION OF THE DRAWINGS

The present invention will be described in more detail with reference to the appended drawings, showing currently preferred embodiments of the invention.
Fig. 1 is a perspective view from above of an exemplary electrically powered industrial truck in accordance with an embodiment;
Fig. 2 is a side view of the truck of Fig. 1;
Fig. 3 is a cross-sectional side view of a battery compartment and a battery pack of an electrically powered industrial truck in accordance with an embodiment;
Fig. 4 is a schematic top view of an exemplary industrial truck fleet system in a warehouse;
Fig. 5 is a schematic side view of a charging station with a vertically extending loop path in accordance with an embodiment, wherein the loop path is arranged as a chain or conveyor, functioning similar to a bucket chain excavator;
Fig. 6 is a schematic side view of a charging station with a vertically extending loop path in accordance with another embodiment, wherein the loop path is arranged as a rotatable wheel, functioning similar to a Ferris wheel or a bucket wheel excavator; and
Fig. 7 is a schematic top view of a charging station with a horizontally extending loop path, functioning similar to a conveyor belt system.

### DETAILED DESCRIPTION OF CURRENTLY PREFERRED EMBODIMENTS

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and fully convey the scope of the invention to the skilled addressee. Like reference characters refer to like elements throughout.

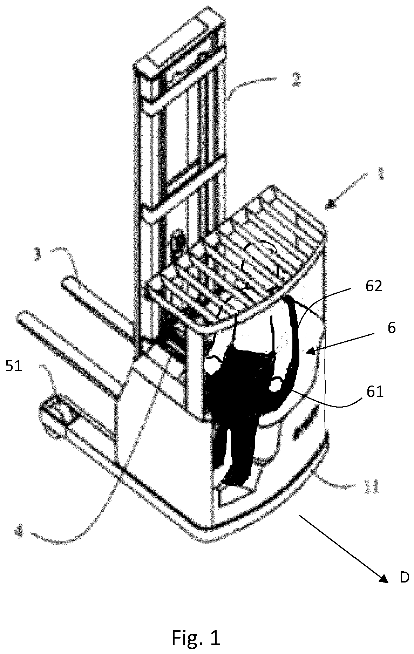

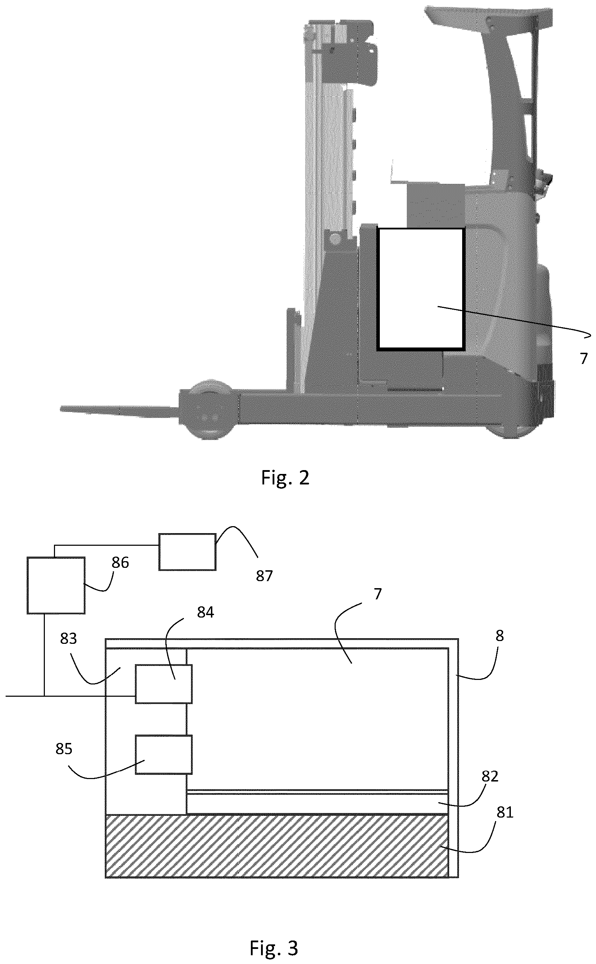

An industrial truck fleet system comprises a plurality of electrically powered industrial trucks. An example of such an industrial truck will now be discussed with reference to Figs. 1 and 2.

Fig. 1 illustrates an overview of an exemplifying industrial truck 1. In a preferred embodiment, the industrial truck is a forklift truck. Truck 1 comprises a frame 11, to which are mounted the major operating components of the truck 1, such as a main telescoping mast 2, for lifting of forks 3, an operator compartment 4, two non-steerable wheels 51, and a drive wheel 52 (not visible in fig 1). The drive wheel 52 may be arranged generally underneath the operator compartment. The dive wheel may also function as the steered wheel, for steering the truck. The two non-steerable wheels 51 may be arranged on a pair of outriggers 24 that extend from the body of the truck in a direction opposite the driving direction, so as to flank either side of the forklift arrangement and the forks. The operator compartment 4 may be open at the side positioned opposite to the forklift arrangement, to provide easy access thereto for the operator.

The forklift truck may, as in the illustrative example, be a reach truck. However, many other types of industrial trucks can also be used.

The truck is here adapted such that a user operating the truck 1 is seated transversely to a driving direction D. For seating, an operator's seat 6 is provided comprising an essentially horizontal seat section 61 and a backrest 62.

As seen e.g. in Fig. 2, a rechargeable battery pack 7 may be arranged at least partly within the operator compartment 4 and arranged between the forklift arrangement 2 and the operator's seat 6. However, the battery pack may also be arranged at other locations within the truck.

The battery pack is preferably formed as a rectangular block. The battery pack may have a length direction corresponding to the width direction of the truck, such as having a length essentially corresponding to the width of the operator compartment. The width of the battery pack is preferably much smaller than the length, such as between ¼ and ½ of the length of the operator compartment. The height of the battery pack is preferably similar to the width.

The battery pack is rechargeable and replaceable. The rectangular block shape facilitates replacement of the battery pack. In a preferred embodiment, the battery is a lithium-ion battery. However, other fast charge battery types may also be used.

As best seen in Fig. 3, the battery pack 7 may be arranged in a battery compartment 8 of the truck. A counterweight 81 may be arranged in the compartment, to provide balance to the truck and compensate for the lower weight of the battery pack 7 compared to conventional lead-acid batteries.

A roller bed 82 or the like may be arranged at the bottom of the compartment, thereby facilitating insertion and extraction of the battery pack 7 into and out from the compartment in a horizontal direction.

At the rear end of the compartment, a locking and connector wall 83 may be provided, comprising a connector 84 and a lock 85. The connector 84 provides an electric connection between the battery pack and the electric system of the truck, as per se known in the art. The connection may also provide data communication. The lock 85 holds the battery pack in place, in a locked position, during use, but may be released for exchange of the battery. The lock 85 may e.g. be an electronic lock, and can be controlled by a control button arranged on the dashboard of the truck, and/or in the vicinity of the opening of the battery compartment. However, the lock may also be a mechanically operated lock, such as a hasp lock, a lock latch, or the like.

The trucks may be provided with a sensor 86 to indicate the state of charge, such as a battery sensor or a charge sensor. Based on the sensor input, a determination can be made whether the state of charge is above or below a predetermined charge level, such as 20% or 10%. The sensor may be integrated in the battery pack. Alternatively, or additionally, the sensor may be arranged in the truck but separated from the battery pack.

A need-for-recharge or low battery indicator 87 can further be provided, to make the operator aware of the need for exchange of battery pack at a charging station. The need-for-recharge indicator could e.g. be a light indicator that arranged to be activated when battery pack has been discharged to reach the replacement level, i.e. the predetermined charge level, has been reached, a display for providing text or graphical information to the operator, an audio indicator, e.g. issuing an alarm, or the like. The need-for-recharge indicator signals to the operator that there is a need to change the battery pack of the truck at a charging station within a certain time period, such as in less than 15 minutes, less than 10 minutes, or the like.

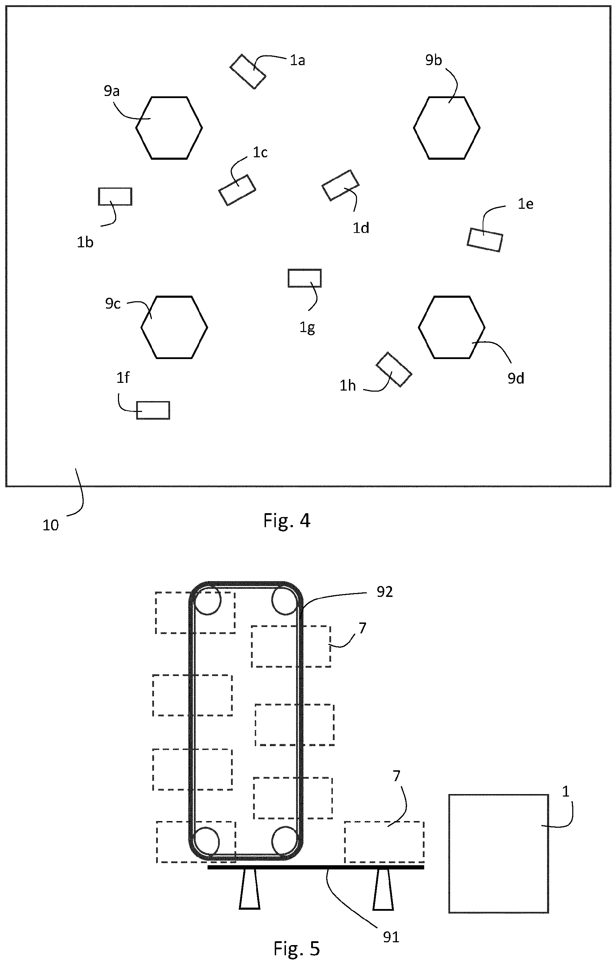

Turning to Fig. 4, an industrial truck fleet system comprises a plurality of electrically powered industrial trucks 1. In the illustrative example the system is arranged in a warehouse 10, and comprises eight trucks 1a-h.

As discussed in the foregoing, each truck comprises an exchangeable and rechargeable battery pack with fast charge batteries.

The system further comprises one or more charging stations for charging the battery packs. Each charging station further accommodates one or more additional battery packs.

The number of charging stations is in the range of 0.01-0.5 times the number of electrically powered industrial trucks. In the exemplary embodiment of Fig. 4 there are four charging stations 9a-9d.

The charging stations 9a-9d are arranged externally from the electrically powered industrial trucks 1a-1h and are arranged to be accessible for the trucks. The charging stations are preferably accessible so that the trucks can be moved to a loading and offloading area of the charging stations, where battery packs to be charged can be offloaded from the trucks and where charged battery packs can be loaded to the trucks.

The charging stations are operated in accordance with a first-in-first-out scheme, so that the battery packs which have been in the charging stations for the longest time, and consequently have charged the longest, are exchanged with the discharged battery pack coming from the truck.

The charging stations are preferably arranged to immediately start to charge any battery pack received from a truck that has changed battery pack, and continue to charge all battery packs in the charging station constantly, or until a desired state of charge has been reached, such as 100%.

The exchange of batteries can be made manually by the operator, but may also be made automatically or semi-automatically, using e.g. robots at the charging stations. In particular for automatic and semi-automatic systems, but also for manual systems, the exchange of battery packs at the charging stations can be made very quickly, such as in a minute or less.

The truck fleet system is operable as a stand-alone system and may be scaled to essentially any number of fleet sizes. Thus, the system is scalable and can be used for any number of trucks and any number of charging stations.

The charging stations may be arranged at positions in the warehouse close to where the trucks frequently travel, where there is access to grid power, where there is no disturbance to the ordinary traffic and activities in the warehouse, and/or the like.

With reference to Figs. 5-7, various exemplary embodiments of the charging stations will now be described. The charging stations may comprise looped paths along which battery packs are moveable during charging. The looped path preferably starts and ends in a common input and output area 91. The input and output area may be easily accessible for the trucks, thereby enabling a swift change of battery packs. The input and output area may be provided with a roller bed to facilitate insertion and removal of a battery pack from the truck.

The looped path may extend in a vertical plane. Arrangement of the looped path in a vertical plane is beneficial since it minimizes the horizontal dimensions of the charging station, thereby lowering the need for occupying valuable floor area

With reference to Fig. 5, one embodiment of a charging station having a vertically arranged loop path comprises a conveyor or chain 92 extending primarily in a vertical direction, similar to a bucket chain excavator. Battery packs 7 received from a truck 1 at the input/output area 91 are connected to or in other ways carried by the conveyor/chain 92, and moved along the looped path and are at the same time charged. The battery pack that has been in the loop for the longest time is output to the truck as a replacement for the discharged battery pack. The input/output area 91 may be realized as a roller bed, a horizontal conveyor, or the like.

The input/output area 91 preferably have a horizontal insertion/removal plane, and preferably arranged as a roller bed, a conveyor, or the like, on which a battery pack can be moved laterally out from the truck, and a replacement battery pack be moved the same way into the truck. Hereby, removal and insertion of battery packs from and into the truck can be made in an essentially horizontal plane, thereby limiting the force required. In case the battery pack compartments of the industrial trucks are arranged at different heights at various trucks, the horizontal insertion/removal plane may be height adjustable, thereby allowing the plane to be height adjusted to the appropriate height for battery pack changes in any of the trucks.

The height adjustment may be controlled by data received from the truck, e.g. by reading an RFID tag of the truck, or by other means of wireless communication.

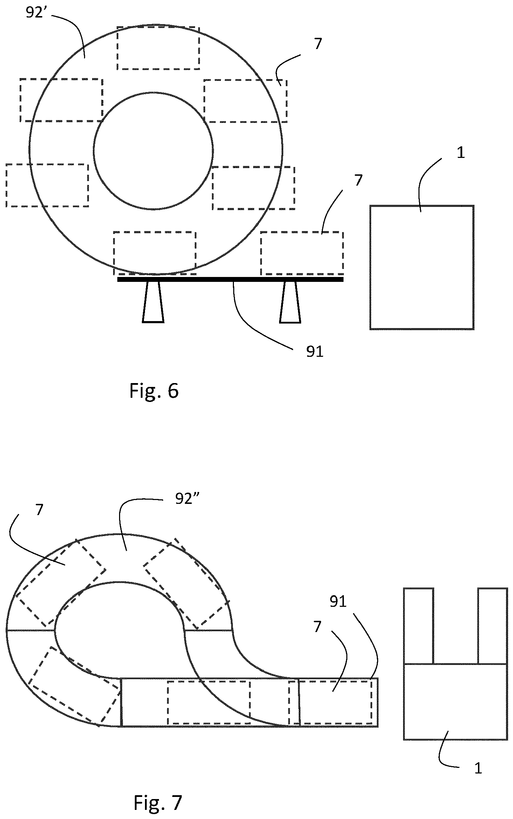

With reference to Fig. 6, another embodiment of a charging station having a vertically arranged loop path is disclosed, comprising a looped path arranged as a rotatable wheel 92'. Thus, also here the loop extends primarily, or at least to a great degree, in a vertical direction, similar to a Ferris wheel or a bucket wheel excavator. The input/output area 91 may be realized in the same or similar way as in the embodiment of Fig. 5. Battery packs 7 received from a truck 1 at the input/output area 91 are connected to or in other ways carried by the rotatable wheel 92', and moved along the looped path and are at the same time charged. The battery pack that has been in the loop for the longest time is output to the truck as a replacement for the discharged battery pack.

The looped path may alternatively extend partly or wholly in a horizontal plane. With reference to Fig. 7, an embodiment of a charging station having a horizontally arranged loop path is disclosed, comprising a looped path arranged as a conveyor 92". Here, the conveyor 92" extends essentially wholly in a single horizontal plane. However, the looped path may also be sloped at various parts, for e.g. to adjust for various heights of the input/output area 91, and may consequently also have some extension in a vertical direction. The conveyor 92" may be realized and function in a way similar to conventional conveyor belt systems. The input/output area 91 may be realized in the same or similar way as in the embodiment of Figs. 5 and 6. Battery packs 7 received from a truck 1 at the input/output area 91 are connected to or in other ways carried by the conveyor 92", and moved along the looped path and are at the same time charged. The battery pack 7 that has been in the loop for the longest time is output to the truck as a replacement for the discharged battery pack.

The fleet of industrial trucks may comprise industrial trucks of the same or similar type, which may all use the same type of battery packs. Further, in case different types of trucks are used within the system, the battery receiving compartment may be adjusted to fit one and the same type of battery packs. Adaptor arrangements may be used to enable matching between various batteries and trucks. In this case, all the trucks may be served by the same charging stations, and each and every of the battery packs within the system may be used as a replacement for the battery pack of any of the trucks.

However, the fleet may also comprise trucks of various types, where the same battery packs are not suitable for use in all of the different truck types.

Thus, in other embodiments the fleet of industrial trucks may comprise industrial trucks of different types, using two or more different types of battery packs. These different types of battery packs may e.g. differ in size, in capacity, in output voltage, in connection arrangements, and the like. For example, the different types of battery packs may be dedicated to various types of industrial trucks, such as trucks of smaller type, middle size trucks, and/or larger trucks.

In such embodiments, the system may comprise the same setup as discussed in the foregoing for at least one second battery pack type, and more preferably at least two or more second battery pack types.

For example, and again with reference to Fig. 4, a first set of trucks 1a-1d may use battery packs of a first type, whereas a second set of trucks 1e-1h may use battery packs of a second type. Further, some of the charging stations may be dedicated to serving battery packs of the first type, such as the charging stations 9a and 9d, whereas other charging stations may be dedicated to serving battery packs of the second type, such as the charging stations 9b and 9c. Hereby, different charging stations are used for the different battery pack types, and a truck in need of a battery pack replacement can choose a charging station for the type of battery pack it is using for the battery pack exchange. In such embodiments, the charging stations may be operated and arranged in essentially the same way, and the management of the two or more types of battery packs will be run in parallel.

However, alternatively the charging stations for charging battery packs of the first type and battery packs of the second or more type may comprise common charging stations for charging battery packs of both the first and second type. In such embodiments, the charging station may accommodate the battery packs of the different types separately, such as in different looped paths. However, it is also feasible to accommodate all the battery packs of the two or more different types in one and the same looped path.

Various ways of determining the type of battery pack to be exchanged at the charging stations are feasible. In embodiments, this can be made by the charging station determining the truck type and/or the battery pack type. The charging station may e.g. be provided with an RFID reader arranged to read an identity or type code for the industrial truck and/or the battery pack from an RFID tag arranged on the truck or the battery pack, thereby enabling determination of the battery pack type.

The person skilled in the art realizes that the present invention by no means is limited to the preferred embodiments described above. On the contrary, many modifications and variations are possible within the scope of the appended claims. For example, the industrial trucks within the system may be of the same type, or of different types. Further, all battery packs may be of the same type, or of two or more different types. Further, the charging stations may be arranged in various ways, as exemplified in the foregoing.

Such and other obvious modifications must be considered to be within the scope of the present invention, as it is defined by the appended claims. It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements. Further, a single unit may perform the functions of several means recited in the claims.

## Claims

1. An industrial truck fleet system comprising:
a first plurality of electrically powered industrial trucks, each truck comprising an exchangeable battery pack of a first type, wherein the batteries of the battery pack of the first type are fast charge batteries;
a plurality of additional battery packs of the first type; and
at least one charging station for charging battery packs of the first type, wherein the charging station(s) accommodates the plurality of additional battery packs of the first type;
wherein the number of charging stations is in the range of 0.01 - 0.5 times the number of electrically powered industrial trucks.

2. The system of claim 1, wherein the battery packs of the first type comprise lithium battery cells.

3. The system of claim 1 or 2, wherein the number of charging stations is in the range of 0.02 - 0.5 times the number of electrically powered industrial trucks, and preferably in the range 0.03 - 0.33.

4. The system of any one of the preceding claims, wherein the number of electrically powered industrial trucks is at least 5, and preferably at least 20, and more preferably at least 50.

5. The system of any one of the preceding claims, wherein the total number of battery packs of the first type is in the range of 1.05 - 1.8 times the number of trucks, and preferably 1.1 - 1.5, and most preferably 1.14 - 1.35.

6. The system of any one of the preceding claims, further comprising a second plurality of electrically powered industrial trucks, each truck comprising an exchangeable battery pack of a second type, wherein the batteries of the battery pack of the second type are fast charge batteries; a plurality of additional battery packs of the second type; and at least one charging station for charging battery packs of the second type, wherein the charging station(s) accommodates the plurality of additional battery packs of the second type, and wherein each charging station operates by a first-in-first-out scheme; wherein the number of charging stations is in the range of 0.01-0.5 times the number of electrically powered industrial trucks comprising battery packs of the second type.

7. The system of claim 6, wherein the charging stations for charging battery packs of the first type and battery packs of the second type comprise common charging stations for charging battery packs of both the first and second type.

8. The system of any one of the preceding claims, wherein each charging station operates by a first-in-first-out scheme.

9. The system of any one of the preceding claims, wherein at least one of the charging stations comprises a looped path along which battery packs are moveable during charging.

10. The system of claim 9, wherein the looped path starts and ends in a common input and output area.

11. The system of claim 9 or 10, wherein the looped path extends in a horizontal plane.

12. The system of claim 8 or 9, wherein the looped path extends in a vertical plane.

13. The system of any one of the preceding claims, wherein the exchangeable battery packs in the electrically powered industrial trucks are arranged to be laterally removable.

14. The system of claim 12, wherein the electrically powered industrial trucks comprise roller beds arranged underneath the battery packs.

15. A method for managing an industrial truck fleet system, wherein the industrial truck fleet system comprises a first plurality of electrically powered industrial trucks, each truck comprising an exchangeable battery pack of a first type, wherein the batteries of the battery pack of the first type are fast charge batteries, a plurality of additional battery packs of the first type, and at least one charging station for charging battery packs of the first type, wherein the charging station(s) accommodates the plurality of additional battery packs of the first type, the method comprising:
continuously determining, in each of the electrically powered industrial trucks, a state of charge of the battery pack;
determining, in each of the trucks, that there is a need for exchange of the battery pack when the determined state of charge is below a predetermined threshold value; and
exchanging the battery pack of the electrically powered industrial trucks for which it has been determined that there is a need for exchange of the batter packs at one of the at least one charging stations, whereby the battery pack of the electrically powered truck is replaced with the additional battery pack of the charging station having been at the charging station for the longest time, in accordance with a first-in-first-out scheme;
wherein the number of charging stations is in the range of 0.01-0.5 times the number of electrically powered industrial trucks.
